# EUROPÄISCHE PATENTSCHRIFT

(11) **EP 1 143 158 B1**
(45) Veröffentlichungstag und Bekanntmachung des Hinweises auf die Patenterteilung: **31.05.2006**
(21) Anmeldenummer: 01106207.2
(22) Anmeldetag: 14.03.2001
(51) Int. Cl.: F16C 9/04

(54) **Verfahren zur Ausbildung einer Schwächungslinie in einem bruchtrennbaren Bauteil, insbesondere mit einer Lageranordnung**
Formation method of a weaknessline in a component which is separable by fracture,especially with a bearing device
Méthode de formation d'une ligne d'affaiblissement dans un composant séparable par fracture,notamment avec un dispositif de palier

(30) Priorität: 08.04.2000 DE 10017691
(43) Veröffentlichungstag der Anmeldung: 10.10.2001
(73) Patentinhaber: Bayerische Motoren Werke Aktiengesellschaft, 80809 München (DE)
(72) Erfinder: Luchner, Clemens, 85598 Baldham (DE); Stothard, Nigel, Dr., 81927 München (DE); Mittrach, Jürgen, 85622 Feldkirchen (DE); Wunder, Jörg, Dr., 85445 Oberding (DE)

(56) Entgegenhaltungen:
- EP-A- 0 613 765
- DE-A- 3 715 325
- DE-A- 4 303 592
- US-A- 5 911 513

## Beschreibung

Die Erfindung bezieht sich nach dem Oberbegriff des Patentanspruches 1 auf ein Verfahren zur Ausbildung einer Schwächungslinie in einem bruchtrennbaren Bauteil, insbesondere mit einer Lageranordnung, wobei eine oberflächennah und mittels in Reihe über Stege gegenseitig beabstandet angeordneter Vertiefungen ausgebildete Schwächungslinie zur bruchkraftabhängigen Rissauslösung in einem spröden Werkstoffbereich angeordnet wird.

Ein im Oberbegriff des Patentanspruches 1 beschriebenes Verfahren ist beispielsweise aus der EP 0 613 765 A1 bekannt, wobei die mittels eines Lasers hergestellten Schwächungslinien eine Vielzahl von zueinander beabstandeten und linienförmig hintereinander angeordneten Sacklochbohrungen umfassen. Die Vielzahl von Sacklochbohrungen längs einer Linie bzw. Schwächungslinie dient der Ausbildung querschnittsschwacher Stege zwischen den einzelnen Sacklochbohrungen, wobei in den Stegen durch Biegebelastung des Werkstückes die Festigkeit der Stege überschreitende Zugspannungen erzeugt werden, die zur Rissbildung führen. Diese Bruchmechanik kann auf Materialien wie Keramik, Kunststoff und Metall angewendet werden, wie in dem oben genannten, gattungsbildenden Dokument dies auf Seite 6 in den Zeilen 11 und 12 geoffenbart ist.

Weiter ist aus der DE 43 03 592 A1 ein bruchtrennbares Bauteil bekannt mit einer thermisch stoffschlüssig angeordneten Funktionsauflage, die beim Bruchtrennen des Bauteiles mit bruchgetrennt wird. Die Schwächungslinie des als Pleuel gestalteten Bauteiles ist eine eingeschmiedete Anrisskerbe, die in einem relativ aufwändigen Verfahren erzeugt werden muss.

Die Ausbildung von Funktionsauflagen mittels eines energiereichen Strahles, wie beispielsweise Laser, ist in der DE 37 15 325 A1 sowie in der DE 38 13 802 A1 beschrieben.

Der Erfindung liegt die Aufgabe zugrunde, das gattungsgemäße Verfahren derart zu vereinfachen, dass zusätzliche Maßnahmen zur Ausbildung einer Schwächungslinie entfallen.

Diese Aufgabe ist mit dem Patentanspruch 1 dadurch gelöst, dass der spröde Werkstoffbereich als eine bei einer thermisch stoffschlüssigen Verbindung zwischen einem Grundwerkstoff des Bauteiles und einem als Funktionsauflage dienenden Zusatzwerkstoff spröde Mischphase erzeugt wird.

Mit der Erfindung wird in vorteilhafter Weise die Erkenntnis genutzt, dass sich bei einer thermisch stoffschlüssigen Verbindung zweier unterschiedlichen Materialien, insbesondere Metallen, eine spröde Mischphase bildet, in der mittels in Reihe angeordneten Vertiefungen, vorzugsweise Sacklochbohrungen, relativ kurze Stege zwischen den Vertiefungen erzeugbar sind, in denen bei Einleitung einer Bruchtrennkraft die für das Bruchtrennen erforderlichen Anrisse in Richtung der Bruchtrennebene erzeugt werden.

Vorzugsweise wird die spröde Mischphase mittels eines energiereichen Strahles beim Schmelzen des Bauteil-Grundwerkstoffes und gleichzeitigem Aufschmelzen des als Funktkionsauflage dienenden Zusatzwerkstoffes erzeugt.

Die erfindungsgemäß genutzte spröde Mischphase wird mittels der mit einem energiereichen Strahl erzeugten Vertiefungen entweder nur angeritzt oder aber von den Vertiefungen durchsetzt.

Das erfindungsgemäße Verfahren dient vorzugsweise der Anordnung einer Gleitlagerschicht als Funktionsauflage in einer Lageranordnung eines bruchtrennbaren Bauteiles. Zur Anwendung der Erfindung nach Patentanspruch 1 wird von einem in der bereits weiter vorne genannten DE 43 03 592 A 1 geoffenbarten Stand der Technik ausgegangen, der eine Lageranordnung in einem als Pleuel ausgebildeten, bruchtrennbaren Bauteil mit einer Schwächungslinie zeigt, die oberflächennah und mittels mindestens einer Vertiefung ausgebildet ist zur bruchkraftabhängigen Rissauslösung in einem spröden Werkstoffbereich des Pleuels, wobei eine thermisch stoffschlüssige Verbindung vorliegt zwischen dem Grundwerkstoff des Pleuels und einem Zusatzwerkstoff, der als Auflage eine Gleitlagerschicht des Pleuels bildet, die mit der Bruchtrennung des Pleuels ebenfalls bruchgetrennt wird.

In Anwendung der Erfindung für ein Produkt mit der bekannten Lageranordnung sind erfindungsgemäß mehrere Vertiefungen vorgesehen, die mittels in Reihe über Stege gegenseitig beabstandet angeordnet sind, wobei die aus dem Grundwerkstoff des Pleuels und der Gleitlagerschicht bei der thermisch stoffschlüssigen Verbindung gebildete Mischphase den spröden Werkstoffbereich bildet.

Das vorzugsweise als Pleuel ausgebildete Bauteil ist gemäß einem weiteren Vorschlag aus einem Eisenwerkstoff mit einem Kohlenstoffgehalt C≈ 0,3 - 0,8 % gebildet, wobei die thermisch stoffschlüssig angeordnete Gleitlagerschicht aus einer Legierung mit einem Hauptanteil an Kupfer oder Zinn oder Aluminium ist, und Beimengungen an Phosphor, Arsen oder Graphit der Versprödung zusätzlich dienen.

In weiterer Ausgestaltung der Erfindung zur Erzeugung einer Schwächungslinie in einem Bauteil bzw. Pleuel aus einem Eisenwerkstoff wird ferner vorgeschlagen, dass mittels eines Strahles zur Ausbildung der Schwächungslinie erzeugte Vertiefungen die Gleitlagerschicht sowie die spröde Mischphase durchsetzend in eine anschließende, wärmeabhängig duktil gewordene Martensit-Schicht verlängert sind, wobei die Abschnitte der Vertiefungen im duktilen Martensit von einer versprödeten, mit der spröden Mischphase in Verbindung stehenden Martensit-Schicht begrenzt sind.

Da die aufgrund des Wärmeeinflusses bei der thermisch stoffschlüssigen Verbindung von Grundwerkstoff und Zusatzwerkstoff duktil gewordene Martensit-Schicht die Anrisse nicht sonderlich gut fortleitet, kann dieser Nachteil mit der Erfindung dadurch überwunden werden, dass die Vertiefungen die spröde Mischphase durchsetzend in die duktile Martensit-Schicht hinein angeordnet werden zur Ausbildung einer sie begrenzenden versprödeten Martensit-Schicht, die gemeinsam mit der spröden Mischphase der Ausbildung von Anrissen bzw. Starterrissen einerseits und einer hervorragenden Fortleitung der Starterrisse in die duktile Martensit-Schicht hinein andererseits dient. Gegebenenfalls können die Vertiefungen auch die duktile Martensit-Schicht durchsetzend angeordnet sein.

Wie aus weiteren Unteransprüchen hervorgeht, kann die Erfindung auch auf Bauteile aus einem Leichtmetall, insbesondere einer Alu-Legierung oder einer Titan-Verbindung Anwendung finden.

Die Erfindung ist anhand von in der Zeichnung dargestellten Ausführungsbeispielen beschrieben. Es zeigt
- Figur 1: eine erfindungsgemäß ausgebildete Schwächungslinie mit einer spröden Mischphase zwischen einem Eisenwerkstoff als Grundmaterial und einer Kupferlegierung als Funktionsauflage für ein Gleitlager,
- Figur 2: eine weitere Ausbildung einer Schwächungslinie mittels einer spröden Mischphase zwischen einem Leichtmetall als Grundwerkstoff und einer Kupfer-Aluminiumlegierung als Funktionsauflage für ein Gleitlager.

Bei einem Verfahren zur Ausbildung einer Schwächungslinie 1 in einer bruchtrennbaren Lageranordnung 2 wird die Schwächungslinie 1 durch oberflächennahe und mittels in Reihe über Stege 3 gegenseitig beabstandet angeordnete Vertiefungen 4 ausgebildet und zwar in einem spröden Werkstoffbereich zur Erzielung einer bruchkraftabhängigen Rissauslösung in den Stegen 3. Da die Gesamtheit der Stege 3 eine kürzere Länge ergibt als die Länge bzw. Breite der jeweiligen Lageranordnung 2 bzw. des Bauteiles, ergibt sich bei einer Brucheinleitung der Umstand, dass die eingebrachte Bruchtrennkraft in der durch die Stege 3 verkürzten Schwächungslinie 1 zunächst Starterrisse erzeugt werden, die für die weitere Bruchtrennung ausschlaggebend sind.

Zur Vereinfachung des gattungsgemäßen Verfahrens durch Fortfall zusätzlicher Maßnahmen wird erfindungsgemäß vorgeschlagen, dass der spröde Werkstoffbereich bei einer thermisch stoffschlüssigen Verbindung zwischen einem Grundwerkstoff 5 des Bauteiles bzw. der Lageranordnung 2 und einem als Funktionsauflage 6 dienenden Zusatzwerkstoff 7 als eine spröde Mischphase 8 erzeugt wird.

Die Erfindung macht sich die Erkenntnis zunutze, dass die spröde Mischphase 8 mittels eines energiereichen Strahles, wie z.B. eines Lasers, beim Schmelzen des Bauteil-Grundwerkstoffes 5 und gleichzeitigem Aufschmelzen des als Funktionsauflage 6 dienenden Zusatzwerkstoffes 7 erzeugt wird.

Zur Erzielung kurzer Stege 3 zur Ausbildung von Starterrissen bei Aufbringung einer Bruchtrennkraft werden mittels eines energiereichen Strahles sacklochartige Vertiefungen 4 ausgebildet und zwar derart, dass diese die spröde Mischphase 8 durchsetzen.

Das erfindungsgemäße Verfahren findet bevorzugt Anwendung zur Anordnung einer Gleitlagerschicht 6 als Funktionsauflage in einer Lageranordnung 2 eines bruchtrennbares Bauteiles, das bevorzugt als Pleuel, insbesondere für Hubkolbenmaschinen, gestaltet ist, wobei mit der Bruchtrennung einer als Pleuelauge gestalteten Lageranordnung 2 die Gleitlagerschicht 6 ebenfalls bruchgetrennt ist. Bei einer Fertigung des Pleuels mit einer Lageranordnung 2 aus einem Eisenwerkstoff mit einem Kohlenstoffgehalt C ≈ 0,3 - 0,8 % kann die thermisch stoffschlüssig angeordnete Gleitlagerschicht 6 z.B. aus CuAI 7 - 10 oder aus CuSn 8 oder aus CuSnP oder schließlich aus SnSb 7 gefertigt sein. Alle diese Gleitlagerwerkstoffe bilden mit dem Eisenwerkstoff, inbesondere z.B. bei einem Kohlenstoffgehalt von C ≈ 0,7 %, die erfindungsgemäß genutzte spröde Mischphase 8.

In einer Lageranordnung 2 aus einem Eisenwerkstoff bildet sich während der thermisch stoffschlüssigen Verbindung des als Funktionsauflage 6 dienenden Zusatzwerkstoffes 7 und des Grundwerkstoffes 5 bzw. des Eisenwerkstoffes unterhalb der spröden Mischphase 8 eine wärmeabhängig duktil gewordene Martensit-Schicht 9 aus, die einer zügigen Rissfortleitung entgegenwirkt. Um dies ohne zusätzliche Maßnahmen zu überwinden wird vorgeschlagen, dass mittels eines Strahles, insbesondere Laserstrahles, zur Ausbildung der Schwächungslinie 1 erzeugte sacklochartige Vertiefungen 4 die Gleitlagerschicht 6 sowie die spröde Mischphase 8 durchsetzend in die anschließende, wärmeabhängig duktil gewordene Martensit-Schicht 9 verlängert sind, wobei der Energieeintrag durch den jeweiligen Strahl so gewählt ist, dass die Abschnitte 4' der Vertiefungen 4 im duktilen Martensit 9 von einer mit der spröden Mischphase 8 in Verbindung stehenden versprödeten Martensit-Schicht 10 begrenzt sind. Diese die Abschnitte 4' der sacklochartigen Vertiefungen 4 begrenzenden versprödeten Martensit-Schichten 10 dienen in Verbindung mit den in der spröden Mischphase 8 ausgebildeten Stegen 3 der Ausbildung von Starterrissen einerseits und der Fortleitung derartiger Starterrisse andererseits in der duktilen Martensit-Schicht 9.

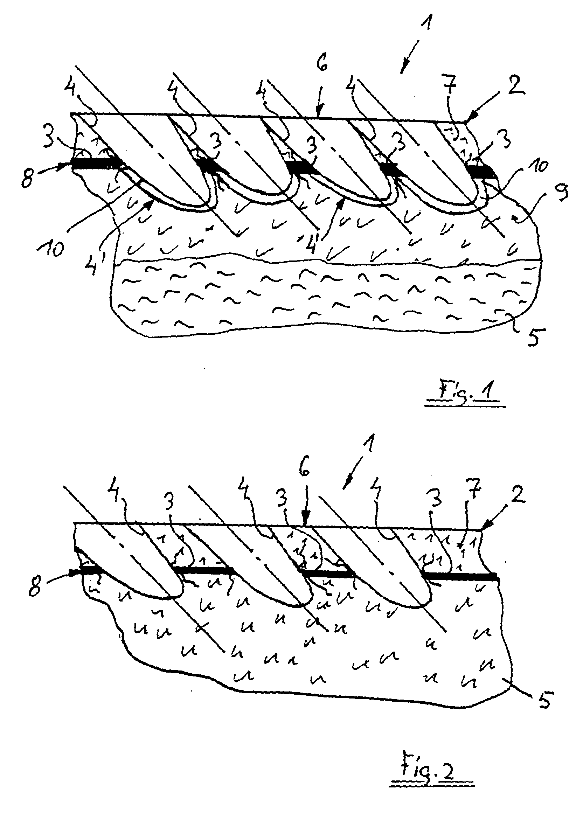

Gemäß Figur 2 ist der Grundwerkstoff 5 in der Lageranordnung 2, beispielsweise für ein Pleuel einer nicht gezeigten Hubkolbenmaschine, eine Leichtmetall-Legierung, z.B. eine Alu-Verbindung oder eine Titan-Verbindung. Für den Fall einer AluminiumLegierung ist die thermisch stoffschlüssig angeordnete Gleitlagerschicht 6 z.B. aus CuAIFe oder CuAIMn oder aus CuAlSe. Für eine Lageranordnung 2 aus einer Titan-Verbindung kann die thermisch stoffschlüssig angeordnete Gleitlagerschicht 6 z.B. aus CuAIB oder aus AISn 20 sein, wobei gegebenenfalls Beimengungen von O2, H2 oder N2 oder Bor vorgesehen sein können. Der jeweiligen Lager-Legierung mit einem Hauptanteil an Kupfer oder Zinn oder Aluminium können für ein Leichtmetall-Pleuel Beimengungen an Eisen oder Mangan oder Silizium zugesetzt sein, die die Versprödung zusätzlich unterstützen.

Die vorbeschriebene Auswahl an Gleitlager-Werkstoffen ist so getroffen, dass zumindest eine Legierungskomponente die Bildung der spröden Mischphase 8 in allen vorgenannten Lageranordnungen 2 unterstützt ist, was gegebenenfalls durch eine entsprechende Gasatmosphäre beim Aufschmelzen des jeweiligen Lagerwerkstoffes eine zusätzliche Unterstützung finden kann.

## Patentansprüche

1. Verfahren zur Ausbildung einer Schwächungslinie (1) in einem bruchtrennbaren Bauteil, insbesondere mit einer Lageranordnung,
- wobei eine oberflächennah und mittels in Reihe über Stege (3) gegenseitig beabstandet angeordneter Vertiefungen (4) ausgebildete Schwächungslinie (1) zur bruchkraftabhängigen Rissauslösung in einem spröden Werkstoffbereich angeordnet wird,
**dadurch gekennzeichnet,**
- **dass** der spröde Werkstoffbereich bei einer thermisch stoffschlüssigen Verbindung zwischen einem Grundwerkstoff (5) des Bauteiles (2) und einem als eine Funktionsauflage (6) dienenden Zusatzwerkstoff (7) als eine spröde Mischphase (8) erzeugt wird.

2. Verfahren nach Anspruch 1, **dadurch gekennzeichnet, dass** die spröde Mischphase (8) mittels eines energiereichen Strahles beim Schmelzen des Bauteil-Grundwerkstoffes (5) und gleichzeitigem Aufschmelzen des als Funktionsauflage (6) dienenden Zusatzwerkstoffes (7) erzeugt wird.

3. Verfahren nach Anspruch 1 und 2, **dadurch gekennzeichnet,**
- **dass** die Vertiefungen (4) mit einem energiereichen Strahl erzeugt werden derart, dass
- die spröde Mischphase (8) von den Vertiefungen (4) angeritzt und/oder durchsetzt ist.

4. Verfahren nach den Ansprüchen 1 bis 3, **gekennzeichnet durch** die Anordnung einer Gleitlagerschicht (6) als Funktionsauflage in einer Lageranordnung (2) eines bruchtrennbaren Bauteiles.

5. Lageranordnung (2) in einem als Pleuel ausgebildeten bruchtrennbaren Bauteil mit einer Schwächungslinie (1), die oberflächennah und mittels mindestens einer Vertiefung ausgebildet ist zur bruchkraftabhängigen Rissauslösung in einem spröden Werkstoffbereich des Pleuels , wobei eine thermisch stoffschlüssige Verbindung vorliegt zwischen dem Grundwerkstoff (5) des Pleuels und einem Zusatzwerkstoff , der als Auflage eine Gleitlagerschicht (6) des Pleuels bildet, die mit der Bruchtrennung ebenfalls bruchgetrennt wird ,
**dadurch gekennzeichnet,**
**dass** mehrere Vertiefungen (4) vorgesehen sind , die mittels in Reihe über Stege (3) gegenseitig beabstandet angeordnet sind, wobei die aus dem Grundwerkstoff (5) des Pleuels und der Gleitlagerschicht (6) bei der thermisch stoffschlüssigen Verbindung gebildete Mischphase (8) den spröden Werkstoffbereich bildet.

6. Lageranordnung nach Anspruch 5, **dadurch gekennzeichnet,**
- **dass** das Pleuel aus einem Eisenwerkstoff mit einem Kohlenstoffgehalt C ≈ 0,3 - 0,8 % gebildet ist, wobei
- die thermisch stoffschlüssig angeordnete Gleitlagerschicht (6) aus einer Legierung mit einem Hauptbestandteil an Kupfer oder Zinn oder Aluminium ist, wobei
- Beimengungen an Phosphor oder Arsen oder Graphit der Versprödung zusätzlich dienen.

7. Lageranordnung nach Anspruch 6, **dadurch gekennzeichnet,**
- **dass** mittels eines Strahles zur Ausbildung der Schwächungslinie (1) erzeugte sacklochartige Vertiefungen (4) die Gleitlagerschicht (6) sowie die spröde Mischphase (8) durchsetzend in eine anschließende, wärmeabhängig duktil gewordene Martensit-Schicht (9) verlängert sind, wobei
- die Abschnitte (4') der Vertiefungen (4) im duktilen Martensit (9) von einer mit der spröden Mischphase (8) in Verbindung stehenden versprödeten Martensit-Schicht (10) begrenzt sind.

8. Lageranordnung nach Anspruch 5, **dadurch gekennzeichnet,**
- **dass** das Pleuel aus einem Leichtmetall, insbesondere Alu-Legierung gebildet ist, wobei
- die thermisch stoffschlüssig angeordnete Gleitlagerschicht (6) aus einer Legierung mit einem Hauptanteil an Kupfer oder Zinn oder Aluminium ist, wobei
- Beimengungen an Eisen oder Mangan oder Silizium der Versprödung zusätzlich dienen.

9. Lageranordnung nach Anspruch 5, **dadurch gekennzeichnet,**
- **dass** das Pleuel aus einer Titan-Verbindung gebildet ist, wobei
- die thermisch stoffschlüssig angeordnete Gleitlagerschicht (6) aus einer Legierung mit einem Hauptanteil an Kupfer oder Zinn oder Aluminium ist, wobei
- Beimengungen von 02 oder H2 oder N2 oder Bor der Versprödung zusätzlich dienen.

## Claims

1. A method of forming a weakening line (1) in a fracturable component, especially comprising a bearing arrangement,
- wherein a weakening line (1), formed near the surface and by means of recesses (4) spaced apart by webs (3) in a row, is produced in a brittle region of the material in order to initiate cracking in dependence on the fracturing force,
**characterised in that**
- the brittle region of material is produced in the form of a brittle mixed phase (8) in the case where an autogenous connection is formed by heating between a matrix material (5) of the component (2) and an additional material (7) serving as a functional coating (6).

2. A method according to claim 1, **characterised in that** the brittle mixed phase (8) is produced by a high-energy beam when the matrix material (5) of the component is melted together with the additional material (7) serving as the functional coating (6).

3. A method according to claims 1 and 2, **characterised in that**
- the recesses (4) are produced by a high-energy beam such that
- the brittle mixed phase (8) is cracked and/or penetrated by the recesses (4).

4. A method according to claims 1 to 3, **characterised by** a functional coating in the form of a friction bearing layer (6) disposed in a bearing arrangement (2) in a fracturable component.

5. A bearing arrangement (2) in a fracturable component in the form of a connecting rod and with a weakening line (1) formed near the surface and by means of at least one recess so as to initiate cracking, in dependence on the fracturing force, in a brittle region of the connecting-rod material, wherein a thermal autogenous connection is formed between the matrix material (5) of the connecting rod and an additional material which forms a friction-bearing layer (6) or coating on the connecting rod, which is also fractured during the fracturing operation,
**characterised in that**
- a number of recesses (4) are provided, spaced apart by webs (3) in a row, wherein the brittle region of material is formed by the mixed phase (8) produced from the friction-bearing layer (6) and the matrix material (5) of the connecting rod during thermal autogenous joining.

6. A bearing arrangement according to claim 5, **characterised in that**
- the connecting rod is formed of an iron material with a carbon content C≈0.3 - 0.8%, wherein
- the thermally autogenously produced friction-bearing layer (6) is formed of an alloy consisting mainly of copper or tin or aluminium, wherein
- the embrittlement is promoted by admixtures of phosphorus or, arsenic or graphite.

7. A bearing arrangement according to claim 6, **characterised in that**
- blind-bore recesses (4) formed by a beam for producing the weakening line (1) and extending through the friction-bearing layer (6) and the brittle mixed phase (8) are prolonged into an adjoining martensite layer (9) formed ductile by heating, wherein
- the portions (4') of the recesses (4) in the ductile martensite (9) are bounded by an embrittled martensite layer (10) connected to the brittle mixed phase (8).

8. A bearing arrangement according to claim 5, **characterised in that**
- the connecting rod is formed of a light metal, especially aluminium alloy, wherein
- the thermally autogenously produced friction-bearing layer (6) is formed of an alloy consisting mainly of copper or tin or aluminium, wherein
- admixtures of iron or manganese or silicon promote the embrittlement.

9. A bearing arrangement according to claim 5, **characterised in that**
- the connecting rod is formed of a titanium compound, wherein
- the thermally autogenously produced friction-bearing layer (6) is formed of an alloy consisting mainly of copper or tin or aluminium, wherein
- admixtures of 02 or H2 or N2 or boron promote the embrittlement.

## Revendications

1. Procédé pour former une ligne d'affaiblissement (1) dans un composant séparable par rupture, en particulier avec un dispositif de palier, selon lequel une ligne d'affaiblissement (1) formée près de la surface et au moyen de creux (4) rangés à distance les uns des autres par l'intermédiaire d'entretoises (3) est prévue pour l'amorce de fissure en fonction de la force de rupture dans une zone de matériau fragile,
**caractérisé en ce que**
la zone de matériau fragile est réalisée comme une phase de mélange fragile (8) lors d'une liaison par complémentarité de matériaux thermique entre un matériau de base (5) du composant (2) et un matériau d'apport (7) servant de revêtement fonctionnel (6).

2. Procédé selon la revendication 1,
**caractérisé en ce que**
la phase de mélange fragile (8) est obtenue au moyen d'un rayon à haute énergie lors de la fusion du matériau de base (5) du composant et par fusion simultanée du matériau d'apport (7) servant de revêtement fonctionnel (6).

3. Procédé selon les revendications 1 et 2,
**caractérisé en ce que**
les creux (4) sont réalisés avec un rayon à haute énergie de sorte que la phase de mélange fragile (8) soit éraflée et/ou traversée par les creux (4).

4. Procédé selon les revendications 1 à 3,
**caractérisé par**
la disposition d'une couche de palier lisse (6) comme revêtement fonctionnel dans un dispositif de palier (2) d'un composant séparable par rupture.

5. Dispositif de palier (2) dans un composant en forme de bielle séparable par rupture avec une ligne d'affaiblissement (1) formée près de la surface et au moyen d'au moins un creux pour l'amorce de fissure en fonction de la force de rupture dans une zone de matériau fragile de la bielle, en présence d'une liaison par complémentarité de matériaux thermique entre le matériau de base (5) de la bielle et un matériau d'apport qui en tant que revêtement forme une couche de palier lisse (6) de la bielle également séparée par rupture lors de la séparation par rupture de la bielle,
**caractérisé en ce que**
plusieurs creux (4) sont prévus rangés à distance les uns des autres par l'intermédiaire d'entretoises (3), la phase de mélange (8) obtenue lors de la liaison par complémentarité de matériaux thermique entre le matériau de base (5) de la bielle et la couche de palier lisse (6) forme la plage de matériau fragile.

6. Dispositif de palier selon la revendication 5,
**caractérisé en ce que**
la bielle est réalisée à partir d'un matériau ferreux avec une proportion de carbone de C ≈ 0,3 % - 0,8 %,
la couche de palier lisse (6) obtenue par complémentarité de matériaux thermique est un alliage avec une composante principale de cuivre, d'étain ou d'aluminium, et
des ajouts de phosphore, d'arsenic ou de graphite favorisent également la fragilisation.

7. Dispositif de palier selon la revendication 6,
**caractérisé en ce que**
des creux (4) en forme de trous borgnes réalisés au moyen d'un rayon pour former la ligne d'affaiblissement (1) traversent la couche de palier lisse (6) ainsi que la phase de mélange fragile (8) et se prolongent dans une couche de martensite (9) suivante devenue ductile en fonction de la chaleur, et
les parties (4') des creux (4) dans la martensite ductile (9) sont limitées par une couche de martensite fragilisée (10) qui est en communication avec la phase de mélange fragile (8).

8. Dispositif de palier selon la revendication 5,
**caractérisé en ce que**
la bielle est réalisée à partir d'un métal léger, en particulier un alliage d'aluminium,
la couche de palier lisse (6) obtenue par complémentarité de matériaux thermique est un alliage avec une composante principale de cuivre, d'étain ou d'aluminium, et
des ajouts de fer, de manganèse ou de silicium favorisent également la fragilisation.

9. Dispositif de palier selon la revendication 5,
**caractérisé en ce que**
la bielle est réalisée à partir d'un composé de titane,
la couche de palier lisse (6) obtenue par complémentarité de matériaux thermique est un alliage avec une composante principale de cuivre, d'étain ou d'aluminium,
des ajouts de 02 ou de H2 ou de N2 ou de bore favorisent également la fragilisation.
